# EUROPÄISCHE PATENTSCHRIFT

(11) **EP 1 880 432 B1**
(45) Veröffentlichungstag und Bekanntmachung des Hinweises auf die Patenterteilung: **04.03.2009**
(21) Anmeldenummer: 06742303.8
(22) Anmeldetag: 03.05.2006
(51) Int. Cl.: H01M 2/00

(54) **AKKUMULATOR**
ACCUMULATOR
ACCUMULATEUR

(30) Priorität: 10.05.2005 DE 102005021421
(43) Veröffentlichungstag der Anmeldung: 23.01.2008
(73) Patentinhaber: VB Autobatterie GmbH & Co. KGaA, 30419 Hannover (DE)
(72) Erfinder: MÜHE, Hans, 31141 Hildesheim (DE)
(74) Vertreter: Gerstein, Hans Joachim
(86) Internationale Anmeldenummer: PCT/DE2006/000761
(87) Internationale Veröffentlichungsnummer: WO 2006/119731

(56) Entgegenhaltungen:
- EP-A- 1 017 119
- EP-A- 1 098 377
- EP-A- 1 156 538

## Beschreibung

Die Erfindung betrifft einen Akkumulator mit einem in Zellgefäße aufgeteilten Batteriegehäuse, einer Vielzahl von zu Elektrodenplattenstapeln parallel nebeneinander durch Separatoren getrennt voneinander gestapelten positiven und negativen Elektrodenplatten und mit einem die Zellgefäße dicht abschließenden Unterdeckel, wobei der Unterdeckel Öffnungen für die Zellgefäße hat und die Öffnungen in ein auf den Unterdeckel aufgesetztes Entgasungskanalsystem münden.

Derartige Akkumulatoren sind insbesondere als Bleiakkumulatoren für Starterbatterien in Kraftfahrzeugen bekannt.

Bei dem Betrieb von Akkumulatoren entsteht Gas, das aus den Zellgefäßen abgeleitet werden muss. Hierzu sind Öffnungen in den Zellgefäßen nach oben vorgesehen, die in ein Entgasungskammersystem münden. Das Entgasungskammersystem ist durch eine Vielzahl von Umlenkstegen so verzweigt, dass ein Labyrinth für Elektrolytflüssigkeit gebildet ist, das durch die Öffnungen von den Zellgefäßen in den Hohlraum schwappen kann. Elektrolyt wird auch im Gasstrom mitgerissen und kann an den Umlenkstegen abprallen und dort kondensieren. Das Entgasungskanalsystem hat dabei ein derartiges Gefälle, dass die Elektrolytflüssigkeit in das Zellengefäß wieder zurückfließen kann.

In der EP 1 901 356 ist ein mehrzelliger Akkumulator mit durchgehender Abdeckleiste offenbart, die die Füllöffnungen verschließt und im aufgesetzten Zustand Entgasungsöffnungen für die einzelnen Zellen freigibt. In jeder Füllöffnung ist ein verschiebbares Rohrteil angeordnet, das bei aufgesetzter Abdeckleiste in Richtung auf das Zelleninnere verschoben ist und mindestens eine Entgasungsöffnung freigibt. Das verschiebbare Rohrteil rastet beim Abheben der Abdeckleiste in eine obere Endlage ein und verschließt dabei die Entgasungsöffnung. Die Abdichtung wird hierbei an kegelförmigen Dichtflächen des Rohrabschnitts vorgenommen.

Aus der EP 1 017 119 A1 ist ein Akkumulator bekannt, bei dem Füllöffnungen in einem Unterdeckel eines Bafteriezellengefäßes mit einem Entgasungskanalelement verschlossen werden, das auf den Unterdeckel aufgesetzt wird und Rohrstücke mit Entgasungsventilen zum Einsetzen in die Öffnungen hat. Die Rohrstücke werden mit Federrasthaken verriegelt, die im Zelleninnenraum mit der Öffnungswandung verriegeln. Die Abdichtung der Öffnung erfolgt dabei radial mit Hilfe einer Presspassung der in die Öffnungen hineinragenden Rohrstücke.

Aus dem US-Patent 4,348,466 ist ein Akkumulator bekannt, bei dem ein Gasungskanalsystem auf die Öffnungen zu den Zellgefäßen aufweisenden Unterdeckel aufgesetzt wird. Wiederum erfolgt die Abdichtung der in die Öffnung hineinragenden rohrförmigen Entgasungsventile radial, jedoch mit Hilfe von an der Außenwand der Rohrstücke umlaufenden Dichtringen.

Auch aus dem US-Patent 3,597,280 ist ein Akkumulator mit aufgesetztem Entgasungskanalsystem bekannt, bei dem das Entgasungskanalsystem mit Hilfe von in die Öffnung hineinragenden Ventilstopfen auf die Zellengefäße aufgesteckt wird. Die Dichtung und Fixierung des Entgasungskanalsystems an den Zellengefäßen erfolgt durch Presssitz der Ventilstopfen in den Öffnungen. Ein Problem bei diesen herkömmlichen Akkumulatoren stellt die Abdichtung der Öffnungen im Unterdeckel zu dem Entgasungskanalsystem auf Grund von Fertigungstoleranzen dar.

Aufgabe der Erfindung ist es daher, einen verbesserten gattungsgemäßen Akkumulator zu schaffen, bei dem ein sicherer und dichter Sitz des nachträglich aufgesetzten Entgasungskanalsystems gewährleistet ist.

Die Aufgabe wird mit dem gattungsgemäßen Akkumulator erfindungsgemäß dadurch gelöst, dass auf dem Unterdeckel angrenzend an jeweils eine Öffnung ringförmige Erhebungen angeformt sind und das Entgasungskanalsystem Befestigungsmittel hat, um das Entgasungskanalsystem so auf dem Unterdeckel festzuspannen, dass mit den Erhebungen durch Flächenpressung eine Abdichtung der Öffnung zu dem Entgasungskanalsystem erfolgt.

Im Unterschied zu der herkömmlichen radialen Dichtung an der Innenwand der Öffnung wird vorgeschlagen, die Abdichtung auf der Oberseite des Unterdeckels um die Öffnung umlaufend mit Hilfe einer Flächenpressung des Entgasungskanalsystems auf den Unterdeckel vorzunehmen. Auch bei einer Verschiebung der Dichtungsauflageflächen auf Grund von Fertigungstoleranzen wird dabei immer noch ein dichter Sitz des Entgasungskanalsystems auf dem Unterdeckel sichergestellt. Um die Abdichtung der Öffnung mit einer Flächenpressung zu erreichen, sind die ringförmigen Erhebungen auf dem Unterdeckel angrenzend an jeweils eine Öffnung vorgesehen, die beim Aufspannen des Entgasungskanalsystems auf den Unterdeckel für einen dichten Kontakt der ringförmigen Erhebung mit dem Entgasungskanalsystem sorgen.

Vorzugsweise sind an dem Entgasungskanalsystem mit den Erhebungen korrespondierende Dichtungen vorgesehen. Alternativ oder zusätzlich können die Erhebungen auch spezielle Dichtungen sein. Die Dichtungen können dabei vorzugsweise aus einem flexiblen Material gebildet sein, um bei dem Aufspannen des Entgasungskanalsystems auf den Unterdeckel zusammengedrückt zu werden und dabei abzudichten. Besonders vorteilhaft ist es, wenn die Dichtungen im 2-Komponenten-Verfahren an das Material des Unter- bzw. Oberdeckels angespritzt sind.

Das Entgasungskanalsystem hat vorzugsweise einen Hohlraum zwischen einem Boden und dem Oberdeckel und sich zwischen dem Boden und dem Oberdeckel erstreckende Umlenkstege zur Bildung des Kanalsystems.

In einer bevorzugten Ausführungsform sind Federschnapphaken an dem Boden des Entgasungskanalsystems zum Eingriff in jeweiligen Öffnungen in Unterdeckel vorgesehen, die sich nach unten vom Hohlraum wegerstrecken. Die Länge der Federschnapphaken ist dabei genau so bemessen, dass beim Aufsetzen des Entgasungskanalsystems auf den Oberdeckel die in die Öffnungen hineinragenden Federschnapphaken mit dem Unterdeckel verriegeln und eine zur Abdichtung der Öffnungen hinreichende Flächenpressung sicherstellen. Durch die Verspannung des Entgasungskanalsystems im Bereich der Öffnungen mit dem Unterdeckel wird vorteilhafterweise eine Flächenpressung im Bereich der Öffnungen sichergestellt, die unabhängig von der Steifigkeit des Entgasungskanalsystems und des Unterdeckels ist.

Die Öffnungen in dem Unterdeckel haben vorzugsweise nach innen in die Zellengefäße hineinragende Rohrstutzen. Diese haben den Vorteil, dass insbesondere in Verbindung mit den Federschnapphaken ein erleichtertes Aufsetzen des Entgasungskanalsystems auf den Unterdeckel und ein Verspannen der Federschnapphaken an den unteren Enden der Rohrstutzen erreicht wird.

Besonders vorteilhaft ist es auch, wenn an dem Unterdeckel sich nach oben von den Zellgefäßen weg erstreckende Wände mit Verriegelungsnasen und/oder Rastnuten vorgesehen sind. Das Entgasungskanalsystem hat dabei mit den Verriegelungsnasen bzw. Rastnuten korrespondierende Federschnapphaken und/oder Führungsnasen, um das Entgasungskanalsystem auf den Unterdeckel zu spannen und dort festzulegen.

Die Erfindung wird nachfolgend anhand der beigefügten Zeichnungen beispielhaft näher erläutert. Es zeigen:
- Figur 1: - Draufsicht auf ein Entgasungskanalsystem mit einem Labyrinth bildenden Umlenkstegen;
- Figur 2: - Draufsicht auf einen Bleiakkumulator mit sechs in ein jeweiliges Zellgefäß mündenden Öffnungen ohne Entgasungskanalsystem;
- Figur 3: - Querschnitts-Explosionsansicht des Entgasungskanalsystems aus Figur 1;
- Figur 4: - Seitenansicht des Entgasungskanalsystems aus Figur 1;
- Figur 5: - Schnittansicht des Unterdeckeis des Bleiakkumulators aus Figur 2 mit aufgesetztem Entgasungskanalsystem;
- Figur 6: - Teil-Längsschnitt durch den Akkumulator aus Figur 2 mit aufgesetztem Entgasungskanalsystem;
- Figur 7: - Schnittansicht eines Ausschnitts des Entgasungskanalsystems um eine Entgasungsöffnung umlaufende Dichtung am Unterteil des Entgasungskanalsystems und Erhebung am Unterdeckel des Akkumulators;
- Figur 8: - Schnittansicht eines Ausschnitts des Entgasungskanalsystems um eine Entgasungsöffnung umlaufende Erhebung am Oberteil des Entgasungskanalsystems und Dichtung am Unterdeckel des Akkumulators;
- Figur 9: - Teil-Schnittansicht einer zweiten Ausführungsform des Akkumulators mit aufgespanntem Entgasungskanalsystem;
- Figur 10: - Teil-Schnittansicht einer dritten Ausführungsform des Akkumulators mit aufgespanntem Entgasungskanalsystem.

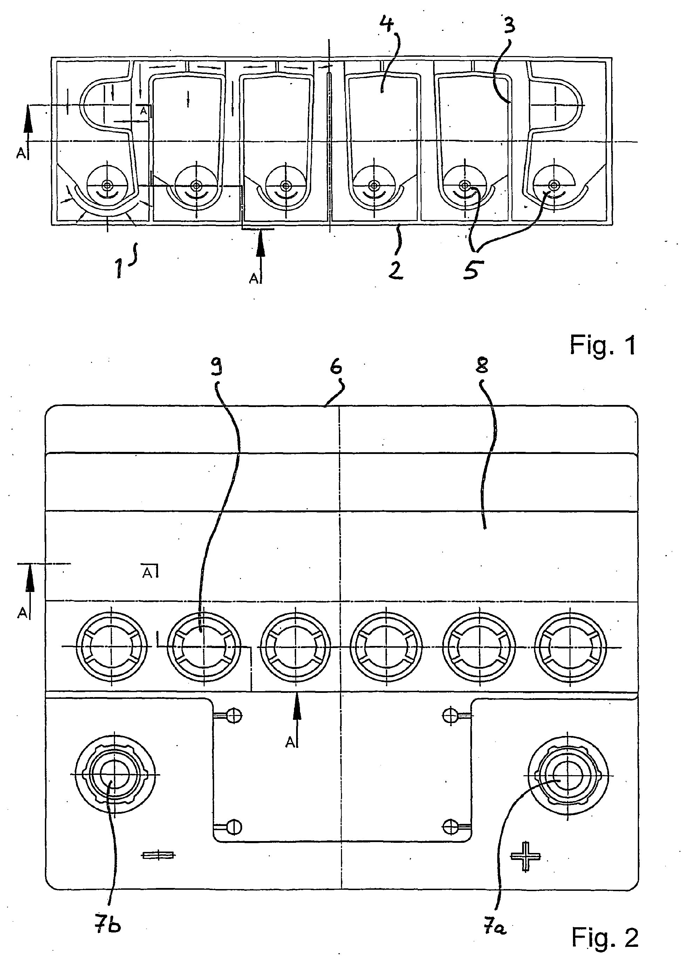

Die Figur 1 lässt eine Schnittansicht eines Entgasungskanalsystems 1 als Draufsicht erkennen. Das rechteckförmige Entgasungskanalsystem 1 hat am Außenumfang umlaufende Außenwände 2 sowie eine Vielzahl von Umlenkstegen 3, die sich vom Boden 4 des Entgasungskanalsystems 1 nach oben zu einem Oberdeckel erstrecken. Die Umlenkstege 3 dienen zur Zurückhaltung von Elektrolyt bei sämtlichen Schräg- und Kipplagen des Akkumulators, wenn Elektrolyt durch Entgasungsöffnungen 5 in den Hohlraum im Entgasungskanalsystem 1 schwappt. Dies ist durch die Pfeile beispielhaft skizziert.

Die Figur 2 lässt eine Draufsicht auf einen Akkumulator 6 mit einem positiven und negativen Pol 7a, 7b für den elektrischen Anschluss erkennen. Der Akkumulator 6 ist in sechs Zellgefäße aufgeteilt. In dem Oberdeckel 8 des Akkumulators 6 sind Öffnungen 9 vorgesehen, die in die Zellgefäße münden. In dem dargestellten Ausführungsbeispiel ist pro Zellgefäß eine Öffnung 9 vorgesehen. Es sind aber auch alternative Ausführungsformen denkbar, bei denen zwei, drei oder mehr Öffnungen pro Zellgefäß vorgesehen sind. Insbesondere ist eine Ausführungsform denkbar, bei der mit Stopfen verschließbare Füll- und Kontrollöffnung getrennt von Entgasungsöffnungen vorgesehen sind.

Bei dem Akkumulator ist vorgesehen, das separate Entgasungskanalsystem (1) auf den Oberdeckel 8 des Akkumulators 6 aufzustecken und dabei die Öffnungen 9 zu verschließen.

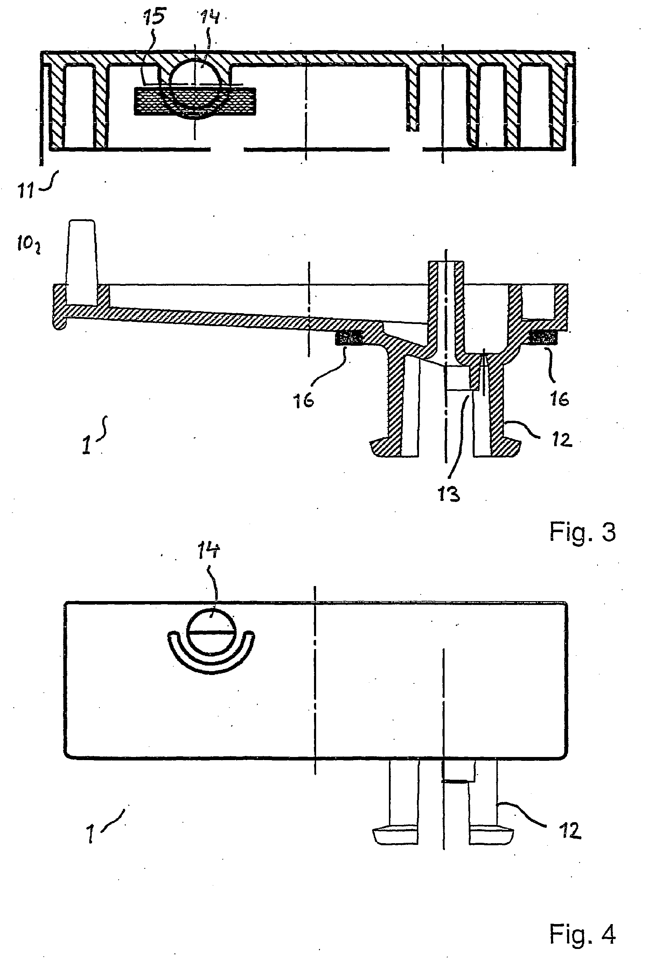

Die Figur 3 lässt eine Querschnittsansicht des Entgasungskanalsystems 1 erkennen, das aus einem Unterteil 10 und einem Oberteil 11 zusammengesetzt ist. Das Oberteil 11 wird dabei mit dem Unterteil 10 verschweißt oder auf sonstige Weise dicht verklemmt. Von dem Unterteil 10 erstrecken sich Federschnapphaken 12 nach unten. Diese sind so angeordnet und ausgerichtet, dass sie in eine jeweils zugeordnete Öffnung 9 hineinragen und dort mit dem Unterdeckel 8 des Akkumulators 6 verriegeln. Die Federschnapphaken 12 sind als ein zylinderförmiges Rohrstück pro Öffnung 9 oder aus mehreren auf einer Kreisbahn im Abstand voneinander angeordneten Federschnapphaken 12 gebildet.

Es ist weiterhin erkennbar, dass in der von den Federschnapphaken 12 umgebenen Entgasungsöffnung ein Entgasungsventil 13 mit einem nach unten in Richtung Zellengefäße und einem nach oben in Richtung Oberteil 11 ragenden Rohrstück vorgesehen ist. Das Entgasungsventil 13 ermöglicht den Gasaustritt auch dann, wenn in das Entgasungskanalsystem 1 ausgetretene Elektrolyt durch die Rücklauföffnung in die Zelle zurückfließt.

Weiterhin ist ein Gasableitungskanal 14 skizziert durch den das Gas von einem Zündschutzelement 15 nach außen in die Umgebung geleitet wird.

Aus der Figur 3 ist weiterhin erkennbar, dass auf der Unterseite des Entgasungskanalsystems 1 pro Öffnung ein die Federschnapphaken 12 umgebenes ringförmiges Dichtelement 16 vorgesehen ist.

Die Figur 4 lässt nochmals eine nicht aufgeschnittene Seitenansicht des Entgasungskanalsystems 1 erkennen.

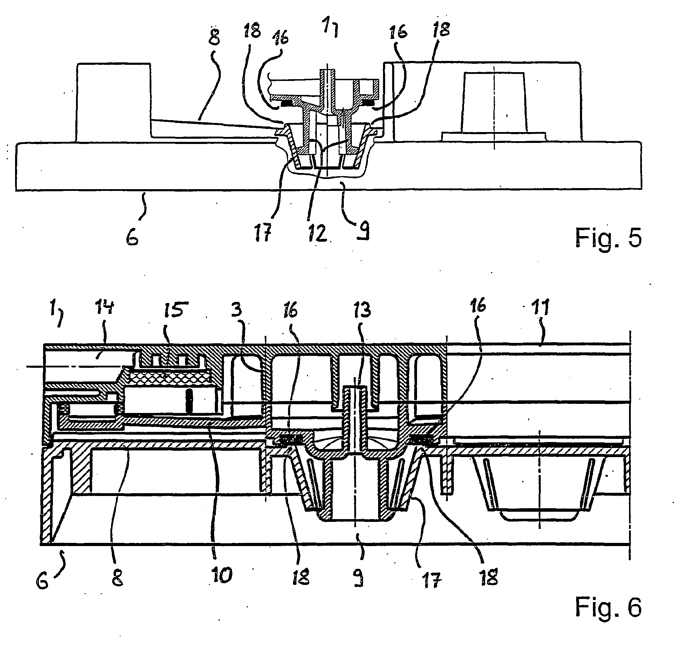

Aus der Figur 5 ist erkennbar, dass das Entgasungskanalsystem 1 auf den Unterdeckel 8 des Akkumulators 6 so aufgesteckt wird, dass die Federschnapphaken 12 in die Öffnungen 9 hineinragen. Die Öffnungen 9 haben einen nach unten in das jeweilige Zellgefäß hineinragendes Rohrstück 17 und eine wulstförmige Erhebung 18 an der Oberseite des Unterdeckels 8. Die wulstförmige Erhebung 18 umgibt die Öffnung 8 vollständig und dichtet die Öffnung 9 nach außen ab, wenn das Entgasungskanalsystem 1 mit Hilfe von in das Rohrstück 17 einschnappenden Federrasthaken auf den Unterdeckel 8 gespannt ist. Dann liegt die wulstförmige Erhebung 18 auf dem ringförmigen Dichtelement 16 auf und sorgen auf Grund der die Federspannhaken 12 sichergestellten Flächenpressung für einen dichten Sitz.
Die Figur 6 lässt eine Längsschnittansicht durch den Akkumulator 6 mit aufgesetztem Entgasungskanalsystem 1 erkennen. Es wird deutlich, dass die ringförmigen Dichtelemente 16, die vorzugsweise flexibel sind, fest auf die wulstförmigen Erhebungen 18 aufgepresst sind und damit eine Abdichtung der Öffnung 9 gegenüber dem umgebenen Außenraum sicherstellen. Die Zellgefäße sind damit nur über die Entgasungsventile 13 in Richtung Hohlraum des Entgasungskanalsystems 1 geöffnet. Mit Hilfe der Umlenkstege 3 wird Elektrolyt von dem Zündschutzelement 15 ferngehalten und Gas kann durch das Zündschutzelemerit 15 durch den Gasableitungskanal 14 nach außen in die Umgebung strömen.

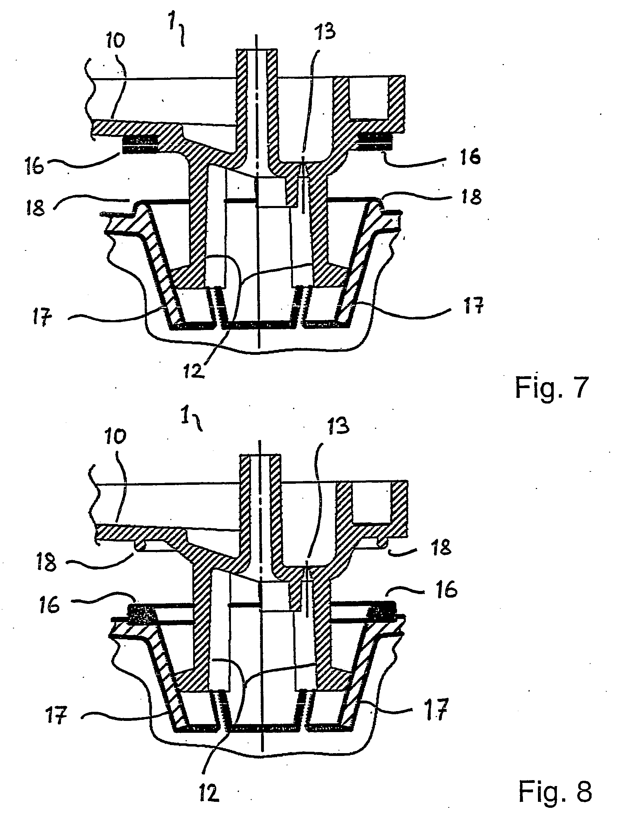

Die Figur 7 lässt eine Schnittansicht eines Ausschnitts erkennen, dass mit seiner Öffnung 9 umgebenden und nach unten ragenden Federschnapphaken 12 teilweise in das Rohrstück 17 des Unterdeckels 8 eingesteckt ist. Wenn das Entgasungskanalsystem 1 vollständig auf den Unterdeckel 8 aufgesteckt ist, verriegeln die Federschnapphaken 12 mit ihren Flügeln am unteren Ende an der Unterkante des Rohrstücks 17.

Es ist erkennbar, dass in der Öffnung 9 Entgasungsventile 13 in Richtung des Hohlraumes des Entgasungskanalsystems 1 vorgesehen sind, um in der Zelle schwappendes Elektrolyt auch beim Kippen des Akkumulators möglichst zurückzuhalten und dennoch ein Entweichen von sich freisetzendem Gas zu ermöglichen.

Bei der dargestellten Ausführungsform ist eine wulstförmige Erhebung 18 vorgesehen, die ringförmig die Öffnung 9 im Unterdeckel 6 umgibt. Auf der Unterseite des Unterdeckels ist ein korrespondierendes ringförmiges flexibles Dichtelement 16 angeordnet, das auf die wulstförmige Erhebung 18 gepresst wird und die Öffnung 9 zusammen mit der wulstförmigen Erhebung 18 abdichtet, wenn das Entgasungskanalsystem 1 fest auf dem Unterdeckel 8 sitzt.

Die Figur 8 lässt eine im Vergleich zur Figur 7 leicht modifizierte Ausführungsform erkennen. Der einzige Unterschied ist, dass auf der Oberseite des Unterdeckel 8 das ringförmige Dichtelement 16 angeordnet ist und mit einer wulstförmigen Erhebung 18 zusammen wirkt, die sich ringförmig an der Unterseite des Unterteils 10 des Entgasungskanalsystems 1 erstreckt und deren Radius vorzugsweise so gewählt ist, dass dieser den mittleren Radius des ringförmigen Dichtelementes 16 entspricht.

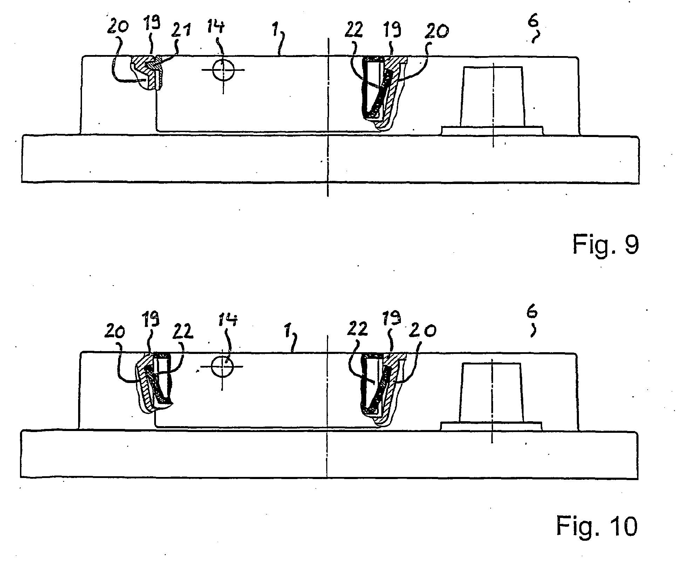

Die Figur 9 lässt eine zweite Ausführungsform des Akkumulators 6 erkennen, bei dem Verriegelungsnasen 19 an vom Unterdeckel 8 von den Zellgefäßen weg nach oben ragenden Wänden 20 vorgesehen sind. Das Entgasungskanalsystem 1 hat mit den Verriegelungsnasen 19 korrespondierende Rastnasen 21 oder Federschnapphaken 22, um das Entgasungskanalsystem 1 mit ausreichender Flächenpressung in Bereich der Öffnungen auf die dort vorgesehenen wulstförmigen Erhebungen 18 aufzupressen. Das Entgasungskanalsystem 1 wird hierbei einfach in die durch die Wände 20 gebildete Mulde des Akkumulators 6 eingesetzt und dort verriegelt.

Die Figur 10 lässt eine dritte Ausführungsform des Akkumulators 6 erkennen, bei dem auf beiden Befestigungsseiten Verriegelungsnasen 19 an den vom Unterdeckel 8 von den Zellgefäßen weg nach oben ragenden Wänden 20 vorgesehen sind. An den Seitenkanten des Entgasungskanalsystems 1 angrenzend an die Verriegelungsnasen 19 sind mit den Verriegelungsnasen 19 zusammenwirkende Federschnapphaken 22 vorgesehen, die aufgrund ihrer nach außen von der Seitenkante des Entgasungskanalsystems 1 weg gerichteten Federkraft unter die Verriegelungsnasen 19 die Federn dort verrasten, wenn das Entgasungskanalsystem 1 in die Mulde des Akkumulatordeckels, d.h. zwischen die Wände 20 gesteckt wird.

In den Figuren 9 und 10 ist ferner das seitlich aus dem Entgasungskanalsystem 1 ausmündende Gas aus Ableitungskanal 14 sichtbar.

## Patentansprüche

1. Akkumulator (6) mit einem in Zellgefäße aufgeteilten Batteriegehäuse, einer Vielzahl von zu Elektrodenplattenstapeln parallel nebeneinander durch Separatoren getrennt voneinander gestapelten positiven und negativen Elektrodenplatten und mit einen die Zellgefäße dicht abschließenden Unterdeckel (8), wobei der Unterdeckel (8) Öffnungen (9) für die Zellgefäße hat und die Öffnungen (9) in ein auf den Unterdeckel (3) aufgesetztes Entgasungskanalsystem (1) münden, ***dadurch gekennzeichnet, dass*** auf dem Unterdeckel (8) angrenzend an jeweils eine Öffnung ringförmige Erhebungen (18) angeformt sind und das Entgasungskanalsystem (1) Befestigungsmittel (12, 21, 22) hat, um das Entgasungskanalsystem (1) so auf dem Unterdeckel (8) festzuspannen, dass mit den Erhebungen (18) durch Flächenpressung eine Abdichtung der Öffnungen (9) zu dem Entgasungskanalsystem (1) erfolgt.

2. Akkumulator (6) nach Anspruch 1, **dadurch gekennzeichnet, dass** an dem Entgasungskanalsystem (1) mit den Erhebungen (18) korrespondierende Dichtungen vorgesehen sind.

3. Akkumulator (6) nach Anspruch 1 oder 2, **dadurch gekennzeichnet, dass** die Erhebungen (18) Dichtungen sind.

4. Akkumulator (6) nach Anspruch 2 oder 3, **dadurch gekennzeichnet, dass** die Dichtungen flexible Dichtringe sind.

5. Akkumulator (6) nach einem der Ansprüche 2 bis 4, **dadurch gekennzeichnet, dass** die Dichtungen im 2-Komponenten-Verfahren angespritzt sind.

6. Akkumulator (6) nach einem der vorhergehenden Ansprüche, **dadurch gekennzeichnet, dass** das Entgasungskanalsystem (1) einen Hohlraum zwischen einem Boden (4) und einem Oberdeckel (11) hat und Entgasungskanalsystem bildende Umlenkstege (3) zwischen dem Boden (4) und dem Oberdeckel (8) angeordnet sind.

7. Akkumulator (6) nach Anspruch 6, **gekennzeichnet durch** sich an dem Boden (4) des Entgasungskanalsystems (1) zum Eingriff in jeweilige Öffnungen (9) im Unterdeckel (8) nach unten vom Hohlraum weg erstreckende Federschnapphaken (12), deren Längen genau so bemessen sind, dass beim Aufsetzen des Entgasungskanalsystems (1) auf den Unterdeckel (8) die in die Öffnungen (9) hineinragenden Federschnapphaken (12) mit dem Unterdeckel (8) verriegeln und eine zur Abdichtung der Öffnung (9) hinreichende Flächenpressung sicherstellen.

8. Akkumulator (6) nach einem der vorhergehenden Ansprüche, **dadurch gekennzeichnet, dass** die Öffnungen (9) in dem Unterdeckel (8) nach innen in die Zellengefäße hineinragende Rohrstutzen haben.

9. Akkumulator (6) nach einem der vorhergehenden Ansprüche, **dadurch gekennzeichnet, dass** an dem Unterdeckel (8) sich nach oben von den Zellgefäßen wegerstreckende Wände (20) mit Verriegelungsnasen (19) und/oder Rastnuten (23) befinden, welche das Entgasungskanalsystem (1) mit entsprechend korrespondierenden Federschnapphaken (22) und/oder Führungsnasen (21) auf den Unterdeckel (8) spannen.

## Claims

1. An accumulator (6) having a battery housing which is split into cell vessels, having a multiplicity of positive and negative electrode plates which are stacked alongside one another parallel to form electrode plate stacks and are separated from one another by separators, and have a lower cover (8) which closes the cell vessels with a seal, with the lower cover (8) having openings (9) for the cell vessels and with the openings (9) opening into a degassing channel system (1) which is fitted to the lower cover (8), ***characterized in that*** annular projections (18) are integrally formed on each opening adjacent to the lower cover (8) and the degassing channel system (1) has attachment means (12, 21, 22) in order to firmly clamp the degassing channel system (1) on the lower cover (8) such that the projections (18) seal the openings (9) to the degassing channel system (1) by surface pressure.

2. The accumulator (6) as claimed in claim 1, **characterized in that** seals which correspond to the projections (18) are provided on the degassing channel system (1).

3. The accumulator (6) as claimed in claim 1 or 2, **characterized in that** the projections (18) are seals.

4. The accumulator (6) as claimed in claim 2 or 3, **characterized in that** the seals are flexible sealing rings.

5. The accumulator (6) as claimed in one of claims 2 to 4, **characterized in that** the seals are molded on using the two-component process.

6. The accumulator (6) as claimed in one of the preceding claims, **characterized in that** the degassing channel system (1) has a cavity between a base (4) and an upper cover (11), and deflection webs (3) which form the degassing channel system are arranged between the base (4) and the upper cover (8).

7. The accumulator (6) as claimed in claim 6, **characterized by** spring snap-action hooks (12) which extend downwards from the cavity on the base (4) of the degassing channel system (1) in order to engage in respective openings (9) in the lower cover (8) and whose lengths are of precisely such a size that, when the degassing channel system (1) is fitted onto the lower cover (8), the spring snap-action hooks (12) which project into the openings (9), lock with the lower cover (8) and ensure surface pressure which is sufficient to seal the opening (9).

8. The accumulator (6) as claimed in one of the preceding claims, **characterized in that** the openings (9) in the lower cover (8) have tubular connecting studs which project inwards into the cell vessels.

9. The accumulator (6) as claimed in one of the preceding claims, **characterized in that** walls (20) which extend away upwards from the cell vessels and have locking tabs (19) and/or latching grooves (23) are located on the lower cover (8), and clamp the degassing channel system (1) on the lower cover (8) by means of appropriately corresponding spring snap-action hooks (22) and/or guide tabs (21).

## Revendications

1. Accumulateur (6) comportant un boîtier de batterie réparti en logements de cellule, comportant un grand nombre de plaques-électrodes positives et négatives empilées de manière séparée les unes des autres par des séparateurs, en étant juxtaposées parallèlement pour former des piles de plaques d'électrodes, et
un sous-couvercle (8) qui ferme de manière étanche les logements de cellule,
le sous-couvercle (8) comportant des orifices (9) pour les logements de cellule, et ces orifices (9) débouchent dans un système de canaux de dégazage (1) appliqué sur le sous-couvercle (8),
**caractérisé en ce que**
le sous-couvercle (8) comporte de façon adjacente à chaque orifice, un bossage annulaire (18), et le système de canaux de dégazage (1) comporte des moyens de fixation (12, 21, 22) pour serrer le système de canaux de dégazage (1) contre le sous-couvercle (8) de façon que les bossages (18) réalisent par une pression surfacique, l'étanchéité des orifices (9) vis-à-vis du système de canaux de dégazage (1).

2. Accumulateur (6) selon la revendication 1,
**caractérisé en ce que**
le système de canaux de dégazage (1) comporte des joints correspondant aux bossages (18).

3. Accumulateur (6) selon la revendication 1 ou 2,
**caractérisé en ce que**
les bossages (18) sont des joints.

4. Accumulateur (6) selon la revendication 2 ou 3,
**caractérisé en ce que**
les joints sont des joints annulaires souples.

5. Accumulateur (6) selon les revendications 2 à 4,
**caractérisé en ce que**
les joints sont surmoulés par un procédé à deux composants.

6. Accumulateur (6) selon les revendications précédentes,
**caractérisé en ce que**
le système de canaux de dégazage (1) comporte une cavité entre le fond (4) et un couvercle supérieur (11), et les entretoises de déviation (3) qui forment le système de canaux de dégazage sont prévues entre le fond (4) et le couvercle supérieur (8).

7. Accumulateur (6) selon la revendication 6,
**caractérisé en ce que**
le fond (4) du système de canaux de dégazage (1) comporte des crochets d'enclipsage élastiques (12) destinés à prendre dans des ouvertures respectives (9) du sous-couvercle (8), ces crochets descendant à partir de la cavité et leur longueur est exactement dimensionnée pour que lorsque le système de canaux de dégazage (1) est appliqué sur le sous-couvercle (8), les crochets d'enclipsage élastiques (12) qui pénètrent dans les ouvertures (9) se verrouillent au sous-couvercle (8) et garantissent une pression surfacique suffisante pour assurer l'étanchéité de l'ouverture (9).

8. Accumulateur (6) selon les revendications précédentes,
**caractérisé en ce que**
les ouvertures (9) du sous-couvercle (8) ont des ajutages tubulaires qui viennent en saillie dans les logements de cellule.

9. Accumulateur (6) selon les revendications précédentes,
**caractérisé en ce que**
le sous-couvercle (8) comporte des parois (20) qui viennent en saillie vers le haut par rapport aux logements de cellule, avec des becs de verrouillage (19) et/ou des rainures d'enclipsage (23) pour serrer le système de canaux de dégazage (1) avec des crochets d'enclipsage à ressort (22) correspondants et/ou des becs de guidage (21) sur le sous-couvercle (8).
